Europäisches Patentamt

European Patent Office

Office européen des brevets

(11) Numéro de publication: **0 258 103 B1**

(12) **FASCICULE DE BREVET EUROPEEN**

(45) Date de publication de fascicule du brevet:
03.07.91

(51) Int. Cl.⁵: **B60G 3/26**, B60G 7/02

(21) Numéro de dépôt: 87401775.9

(22) Date de dépôt: 30.07.87

(54) **Suspension à roue indépendante pour véhicule automobile.**

(30) Priorité: 11.08.86 FR 8611565

(43) Date de publication de la demande:
02.03.88 Bulletin 88/09

(45) Mention de la délivrance du brevet:
03.07.91 Bulletin 91/27

(84) Etats contractants désignés:
BE DE ES GB IT SE

(56) Documents cités:
DE-A- 2 405 306
FR-A- 2 029 015
FR-A- 2 563 167
GB-A- 1 186 672
US-A- 2 094 824

PATENT ABSTRACTS OF JAPAN, vol. 7, no.
237 (M-250)[1382], 21 octobre 1983; & JP-A-58
126 206 (NISSAN JIDOSHA K.K.) 27-07-1983

(73) Titulaire: REGIE NATIONALE DES USINES RE-
NAULT
Boîte postale 103 8-10 avenue Emile Zola
F-92109 Boulogne-Billancourt(FR)

(72) Inventeur: Gallet, Patrick
12, rue de Sacaly
F-91400 Saclay(FR)
Inventeur: Elias, Bernard
13, La Villeparc Elancourt
F-78310 Maurepas(FR)

(74) Mandataire: Ernst-Schonberg, Michel et al
REGIE NATIONALE DES USINES RENAULT (S.
0267) 8 & 10, avenue Emile Zola
F-92109 Boulogne Billancourt Cédex(FR)

## Description

La présente invention se rapporte à une suspension à roue indépendante comportant au moins une articulation à géométrie variable compensant, en grande partie, le carrossage et la variation de voie pris par le train lors des débattements importants de la roue, du type divulgé, par example, par JP-A-58 126 206 et FR-A-2 563 167.

On sait l'intérêt, au regard de la tenue de route d'un véhicule automobile, de constituer un train dont la géométrie demeure constante quelles que soient les situations rencontrées sur le parcours effectué.

Considérons un train avant classique, du type Mac PHERSON, selon lequel le porte-fusée est solidarisé à la caisse, d'une part, au moyen d'une jambe de force verticale et, d'autre part, par un bras transversal au véhicule, mobile en rotation autour d'un axe longitudinal sensiblement parallèle à l'axe central de la caisse.

On comprend que, lors du débattement du bras au passage de la roue sur les obstacles, le plan de cette dernière ne reste pas parallèle au plan de symétrie longitudinal de la caisse, mais au contraire, décrit une trajectoire centrée sur l'axe du bras transversal oscillant.

La roue concernée par le passage d'obstacles prend ainsi un angle de carrossage ou de contre-carrossage aux conséquences indésirables sur la tenue de route.

En outre, la voie du train va varier de façon importante entraînant une grande variation en hauteur du centre de roulis.

La présente invention a pour but de pallier les inconvénients ci-dessus, en permettant le maintien du parallélisme du plan de roue au cours du débattement du train par rapport au plan de symétrie longitudinal du véhicule.

L'invention sera décrite, à titre d'exemple non limitatif, au regard des figures 1 à 3 ci-jointes, qui se rapportent respectivement :
- la figure 1, à une vue en perspective d'un train avant selon l'état de la technique,
- la figure 2, à une vue analogue d'un train selon l'invention,
- la figure 3, à une vue de détail et en coupe d'une articulation élastique telle qu'utilisée dans la réalisation de la figure 2.

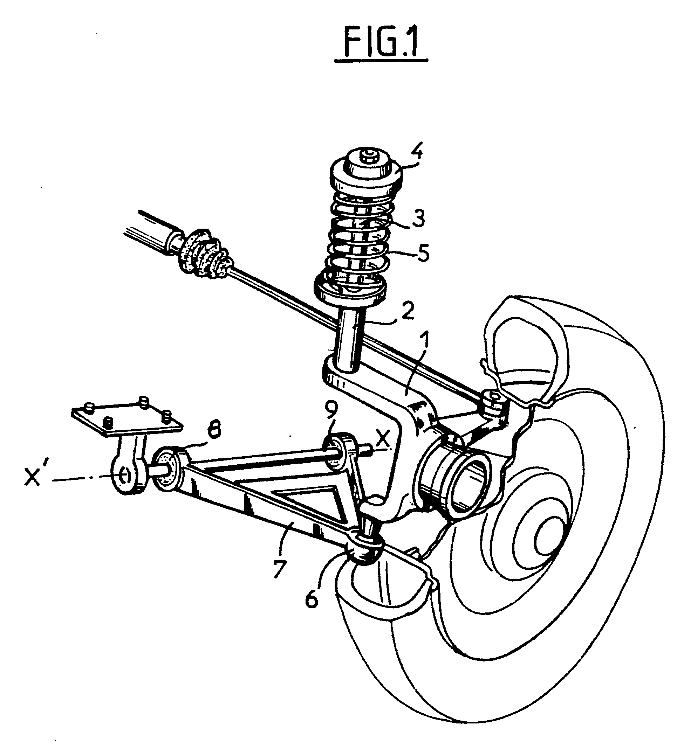

Le train avant, selon l'état antérieur de la technique illustré à la figure 1, est constitué par un porte-fusée 1 supportant la base d'un amortisseur 2 pourvu d'un ressort hélicoïdal 5 et dont la tige supérieure 3 est solidarisée à la caisse 4 ; la base du porte-fusée 1, munie d'une rotule 6, est réunie à la caisse par le sommet d'une triangulation 7, dont la base tourillonne autour d'un axe X'X, parallèle à l'axe longitudinal du véhicule.

Cet effet est obtenu au moyen de deux blocs cylindriques en caoutchouc 8-9, dont la surface extérieure est adhérisée à la triangulation 7, tandis que leur centre l'est à l'axe X'X solidaire de la caisse. La distance X'X rotule 6 étant constante, tout obstacle rencontré par la roue aura tendance à la remonter selon un arc de diamètre égal à la distance ci-dessus et dont le centre se trouve en X'X.

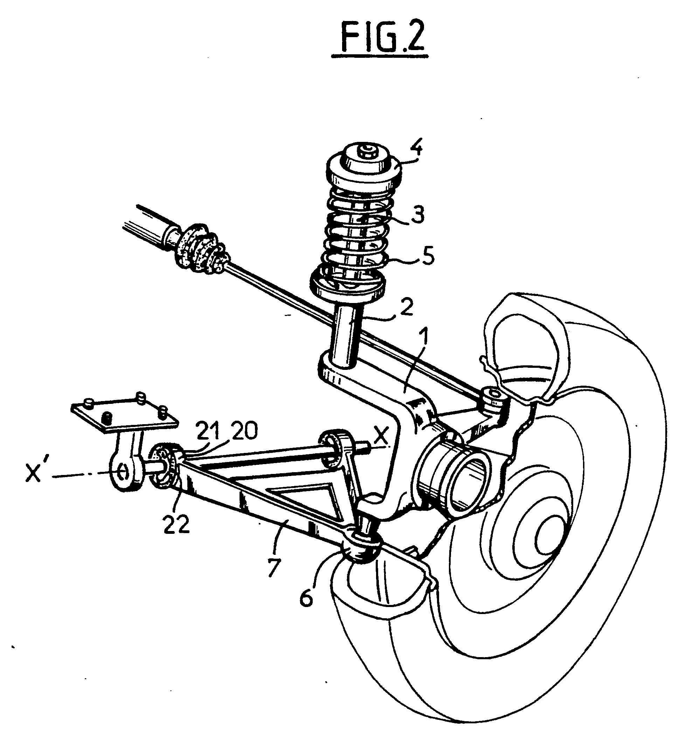

Le train selon l'invention illlustré à la figure 2 diminue très sensiblement cette déformation du plan de roue.

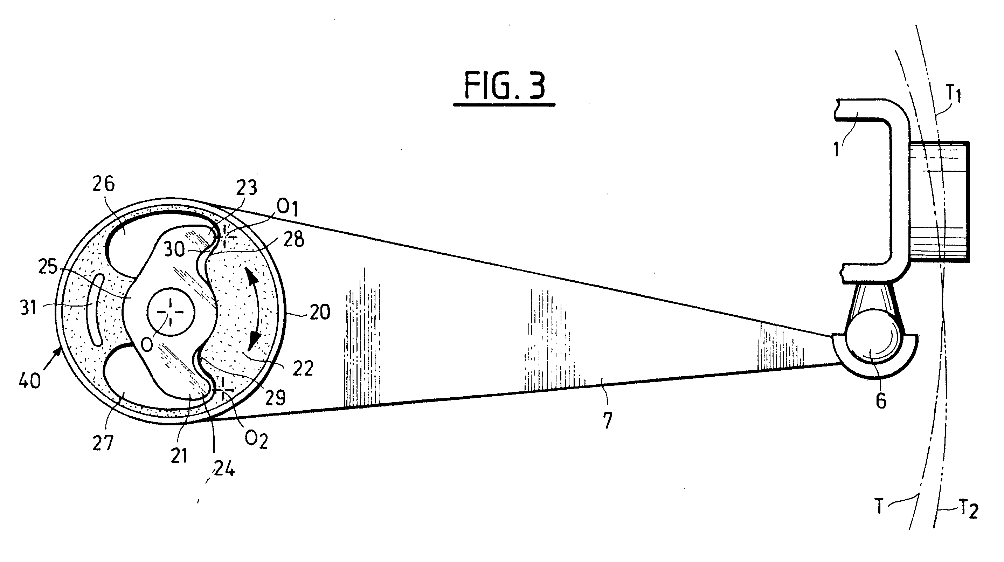

Il ne diffère de celui de la figure 1 que par l'utilisation, à la place des caoutchoucs cylindriques 8-9 homogènes, des éléments 40 à géométrie variable bien visibles en détail à la figure 3.

Ces derniers sont constitués d'une paroi extérieure métallique 20 fixée à la triangulation transversale 7, d'un noyau central 21 solidaire de la caisse et d'un élément intermédiaire partiellement évidé, en élastomère 22.

Comme on le voit, le noyau central 21 a la forme d'une came arquée, dont les extrémités 23-24 sont dirigées du côté de la roue et dont la partie centrale présente un renflement 25 du côté opposé à la roue.

L' élément intermédiaire en élastomère 22 présente au niveau des parties supérieure et inférieure du noyau 21, des évidements 26-27 dont les zones 28-29 faisant face aux extrémités 23-24 de la came 21 ont une forme correspondante, quoique ménageant un espace 30 entre la came 21 et le caoutchouc 22 ; ce dernier présente, en outre, une alvéole 31 au droit du renflement central 25 de la came 21.

Le fonctionnement du train selon l'invention est le suivant :
Lors du débattement du bras 7 sous l'influence de la roue, les pièces 40 sont entraînées en oscillation selon la flèche F jusqu'à ce que les extrémités 23-24 fixes de la came 21 entrent en contact avec les parties de l'élément en caoutchouc 22 qui leur font face, en deux points respectivement $O_1$ et $O_2$ ; celles-ci deviennent alors, et provisoirement, les nouveaux centres de rotation du bras 7. Par conséquent, le rayon de courbure de l'arc décrit par la roue dans le plan vertical est ralongé d'autant, si bien que le plan de roue lui-même est moins dévié de sa position d'origine.

Ceci est bien visible à la figure 3 où on voit que les trajectoires $T_1$ et $T_2$ décrites par la roue avec la suspension de l'invention sont moins arquées que la trajectoire T décrite selon la suspension de la figure 1.

La présence de l'alvéole 31 donne de la souplesse à l'élément en caoutchouc 22 dans une zone qui facilite la déformation recherchée, entraînant le changement du centre de rotation apparent.

**Revendications**

1. Suspension à roue indépendante du type Mac PHERSON, comportant une jambe de force (2) pourvue d'un ressort hélicoïdal (5) et un bras transversal (7) articulé à la caisse selon un axe longitudinal (XX') au moyen d'éléments (40) à géométrie variable constitués par une paroi extérieure métallique (20) fixée au bras transversal (7) et par un noyau central (21) solidaire de la caisse selon l'axe longitudinal (XX') et relié à la paroi métallique (20) par un élément en élastomère (22), caractérisé en ce que le noyau central (21) qui est solidaire de la caisse est en forme de came arquée dont les extrémités (23) (24) sont dirigées du côté de la roue et dont la partie centrale possède un renflement (25) orienté du côté opposé à la roue, et que l'élément intermédiaire en élastomère (22) présente au niveau des parties supérieure et inférieure du noyau (21) des évidements (26) (27) dont les zones (28) (29) qui font face aux extrémités (23) (24) de la came (21) ont une forme correspondante, mais légèrement espacée par rapport à ces dernières.

2. Suspension selon la revendication 1, caractérisée en ce que l'élément intermédiaire en élastomère (22) présente une alvéole (31) au droit du renflement central (25) de la came (21).

**Claims**

1. An independent wheel suspension of the MacPherson type comprising a strut (2) provided with a coil spring (5) and a transverse arm (7) pivotally mounted to the body on a longitudinal axis (XX') by means of variable geometry elements (40) formed by an external metal wall (20) fixed to the transverse arm (7) and a central core (21) which is fixed with respect to the body on the longitudinal axis (XX') and connected to the metal wall (20) by an elastomer element (22), characterised in that the central core (21) which is fixed with respect to the body is in the form of an arched cam of which the ends (23, 24) are directed towards the wheel side while the central part thereof has an enlargement (25) which is oriented towards the side opposite to the wheel, and that at the location of the upper and lower parts of the core (21) the intermediate elastomer element (22) has recesses (26, 27) of which the zones (28, 29) which face the ends (23, 24) of the cam (21) are of a corresponding shape which however is slightly spaced with respect to the ends of the cam.

2. A suspension according to claim 1 characterised in that the intermediate elastomer element (22) has an opening (31) in line with the central enlargement (25) of the cam (21).

**Ansprüche**

1. Einzelradaufhängung vom Typ MacPherson, mit einem Stoßdämpfer (2), der eine Schraubenfeder (5) aufweist, sowie mit einem Querlenker (7), der um eine Längsachse (XX') schwenkbar an der Karosserie gelagert ist mittels Bauteilen (40) variabler Abmessungen, bestehend aus einer metallischen Außenhülle (20), die am Querlenker (7) befestigt ist und aus einem zentralen Kern (21), der mit der Karosserie über die Längsachse (XX') fest verbunden ist und der mit der metallischen Hülse (20) über ein elastisches Bauteil (22) verbunden ist, dadurch gekennzeichnet, daß der mit der Karosserie fest verbundene zentrale Kern (21) aus einem bogenförmigen Nocken besteht, dessen Enden (23, 24) zur Radseite weisen und dessen Mittenabschnitt eine Wulst (25) auf der dem Rad abgewandten Seite aufweist und daß das elastische Bauteil (22) auf Höhe der oberen und unteren Abschnitte des Kerns (21) Aussparungen (26, 27) aufweist, deren den Enden (23, 24) des Nockens (21) gegenüberliegende Bereiche (28, 29) eine angepaßte Form aufweisen, jedoch in einem geringen Abstand von den Enden angeordnet sind.

2. Aufhängung nach Anspruch 1, dadurch gekennzeichnet, daß das elastische Bauteil (22) eine Aushöhlung (31) auf Höhe der zentralen Wulst (25) des Nockens (21) aufweist.

# FIG.1

# FIG.2

## FIG. 3

EP 0 258 103 B1